# EUROPEAN PATENT APPLICATION

(11) **EP 3 654 257 A1**
(43) Date of publication of application: **20.05.2020**
(21) Application number: 19208655.1
(22) Date of filing: 12.11.2019
(51) Int. Cl.: G06Q 10/08, G06Q 50/28

(54) **VISUAL PICKING FOR SINGLE PICK AND SINGLE PACK WAREHOUSE MANAGEMENT**

(30) Priority: 13.11.2018 US 201862760530 P; 08.11.2019 US 201916678098
(71) Applicant: Lifetime Brands, Inc., Garden City, NY 11530 (US)
(72) Inventor: FITZGERALD, David, Garden City, NY New York 11530 (US); RILL, Keith, Garden City, NY New York 11530 (US)
(74) Representative: Harding, Andrew Philip

(57) **Abstract**

A system is provided. The system includes a warehouse management server (WMS) for storing delivery order information and locations of items specified in each of a plurality of delivery orders. The system further includes a mobile device, in communication with the WMS, for enabling user interaction with the delivery order information and the locations of the items in real-time. The system also includes an optical scanner, in communication with the mobile device, for tracking (i) picked ones of the items and (ii) item totes containing the picked ones of the items. The WMS determines the picked ones of the items, the item totes containing the picked ones of the items, and item packages for the picked ones of the items, and sends directions displayed on the mobile device for picking and packing the picked one of the items in each of the plurality of delivery orders responsive to the determining.

## Description

### BACKGROUND

The present invention generally relates to order picking and packing in a fulfillment center or warehouse prior to small parcel shipping , and more particularly to guiding a picker to complete a pick tour that completes or picks multiple orders at a time with a visual aid for cluster picking large quantities of an item and then confirming certain quantities to specific cartons or totes for individual orders. The visual aids also include an image of the item and a guide for the pick path and the location to pick from. The invention handles cluster picking for multiple line item orders (Visual Pick) as well as single line, single order and single piece (SLSOSP) orders (Single Pick) and the subsequent visual aid to pack SLSOSP orders (Single Pack). Pick and pack warehouse processes and tools to support them can provide a variety of efficiencies to order fulfillment and warehouse management. Indeed, the location, selection and shipment of items can be a bottleneck to providing service to customers, as well as to efficient and orderly warehousing. However, visual pick and pack warehousing can rely on inefficient ways of locating and selecting items, such as, for example, using bulky and unconnected terminals for identification of items and containers, complicated processes for picking single location items for one pick, among other practices. Hence, there is a need for an improved approach for pick and pack processing.

### SUMMARY

According to an aspect of the present invention, a visual picking and packing system is provided for pick and pack. The system includes a warehouse management server for storing delivery order information and locations of items specified in each of a plurality of delivery orders. The system further includes a mobile device, in communication with the warehouse management server, for enabling user interaction with the delivery order information and the locations of the items in real-time. The system also includes an optical scanner, in communication with the mobile device, for tracking (i) picked ones of the items and (ii) item totes containing the picked ones of the items. The warehouse management server determines the picked ones of the items, the item totes containing the picked ones of the items, and item packages for the picked ones of the items, and sends directions displayed on the mobile device for picking and packing the picked one of the items in each of the plurality of delivery orders responsive to the determining.

According to another aspect of the present invention, visual picking and packing method is provided for pick and pack. The method includes storing, by a warehouse management server, delivery order information and locations of items specified in each of a plurality of delivery orders. The method further includes enabling, by a mobile device in communication with the warehouse management server, user interaction with the delivery order information and the locations of the items in real-time. The method also includes tracking, by an optical scanner in communication with the mobile device, (i) picked ones of the items and (ii) item totes containing the picked ones of the items. The method additionally includes determining, by the warehouse management server, the picked ones of the items, the item totes containing the picked ones of the items, and item packages for the picked ones of the items. Directions are displayed on the mobile device for picking and packing the picked one of the items in each of the plurality of delivery orders responsive to the determining.

These and other features and advantages will become apparent from the following detailed description of illustrative embodiments thereof, which is to be read in connection with the accompanying drawings.

### BRIEF DESCRIPTION OF THE DRAWINGS

The following description will provide details of preferred embodiments with reference to the following figures wherein:
FIG. 1 is a block diagram showing an exemplary processing system, in accordance with an embodiment of the present invention;
FIG. 2 is a block diagram showing an exemplary system architecture of a Warehouse Management System (WMS) 201, in accordance with an embodiment of the present invention;
FIG. 3 is a flow diagram showing an exemplary method for visual picking system for single pick and single pack, in accordance with an embodiment of the present invention;
FIG. 4 is a flow diagram showing an exemplary visual pick up method, in accordance with an embodiment of the present invention;
FIG. 5 is a block diagram showing an exemplary cart tote number assignment scheme in DCS, in accordance with an embodiment of the present invention;
FIG. 6 is a block diagram showing an exemplary SLSOSP visual pick application, in accordance with an embodiment of the present invention;
FIG. 7 is a flow diagram showing an exemplary method for SLSOSP Carts/Tours Selection in VP SLSOSP Application, in accordance with an embodiment of the present invention;
FIG. 8 is a flow diagram showing an exemplary method for a Visual Picking (VA) application, in accordance with an embodiment of the present invention;
FIG. 9 is a flow diagram showing an exemplary method for a SLSOSP picking tour, in accordance with an embodiment of the present invention;
FIG. 10 is a block diagram further showing an exemplary tote arrangement in a cart, in accordance with an embodiment of the present invention;
FIGs. 11-13 are flow diagrams showing an exemplary Visual Packing Application (VPA) method, in accordance with an embodiment of the present invention;
FIG. 14 is a diagram showing an exemplary screen shot of a build cart portion of the VPA, in accordance with an embodiment of the present invention;
FIGs. 15-16 are flow diagrams showing an exemplary method for performing a tour in the Visual Picking (VP), in accordance with an embodiment of the present invention;
FIG. 17 is a diagram showing an exemplary screenshot of a shortage management frame, in accordance with an embodiment of the present invention.
FIGs. 18-19 are flow diagrams showing an exemplary method for single pick, in accordance with an embodiment of the present invention; and
FIG. 20 is a flow diagram showing an exemplary method for single pack, in accordance with an embodiment of the present invention

### DETAILED DESCRIPTION

Embodiments of the present invention within warehouse management are directed to visual picking to cluster pick items for multi-line orders and SLSOSP orders and the packing of SLSOSP orders.

Embodiments of the present invention are directed to three applications referred to herein as "visual pick," "single pick." and "single pack."

As used herein, the term "visual pick" refers to a software application and corresponding system that supports cluster picking multiple orders at a time on one trip through the picking area with visual aids of instructions on the pick path, the location and item and overall quantity to pick as well as the deposits to the cartons and related pick confirmations.

As used herein, the term "single pick" refers to a software application and corresponding system that supports cluster picking of all single line item, single piece orders into serialized totes on one trip through the picking area with the visual aids of instructions on the pick path, the location and item and overall quantity to pick as well as the deposit of the multiple pieces picked into the designated serialized totes and related pick confirmations.

As used herein, the term "single pack" refers to a software application and corresponding system that supports packing single line, single piece orders that were picked into serialized totes through allowing the packer to select a tote for packing to assign themselves all the orders contained in the tote and to then scan the individual UPC barcode to call up the packing instructions for a specific order for the item with visual representation of the item, packing instructions, and the printing of the required packing slip and shipping label to complete the packing process to then ship the order to the customer.

As is evident to one of ordinary skill in the art given the teachings of the present invention provided herein, the clustering approach and visual aid of putting specific quantities of the item into their designated cartons of the present invention advantageously increases an amount of delivery orders that are capable of being picked and packed accurately over a given time period, thus increasing order fulfillment efficiency.

Some embodiments of the present invention can involve a 3 stage approach including the following stages: (1) print; (2) build; and (3) tour. The print stage corresponds to scanning a cart manifest (listing the items specified in a given order) which results in corresponding shipping labels and packing slips being initialized and printed. At least some printing can be deferred depending upon order fill status. The build stage corresponds to building (filling) a cart with building boxes (totes). The tour picking stage corresponds to filling the building boxes (totes) with picked items. The tour stage is performed to support cluster picking of single item orders as well as cluster picking of multiple item orders in efficient manners as described herein. Various screens are provided to a user on a user device (e.g., a tablet) to enable the user to perform visual pick, single pick, and/or single pack, some of such screen shorts being depicted herein. Other ones of the screen shots are readily discernable and can be readily generated based on the teachings of the present invention provided herein.

As used herein, the term "user" can refer to a picker, a packer, and a combination thereof. For example, in some embodiments, it is envisioned that the same user will pick multiple orders and then can also pack the multiple orders, or someone else can pack the multiple orders.

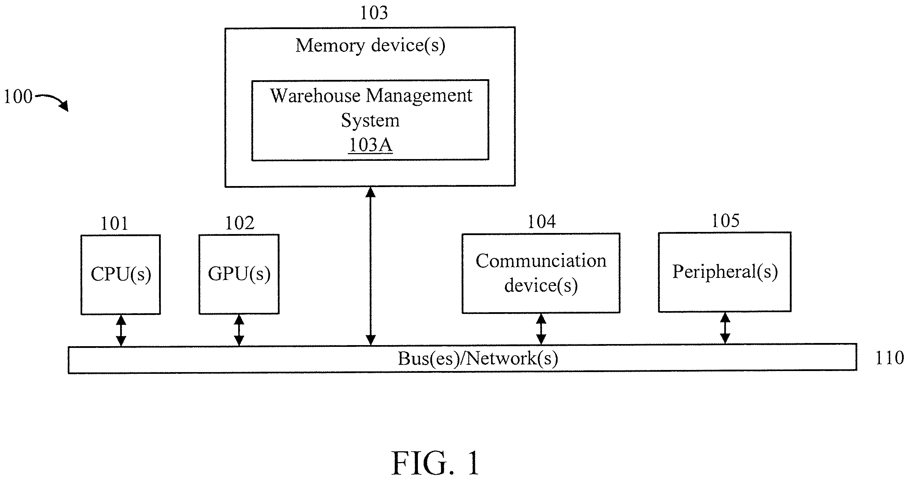

FIG. 1 is a block diagram showing an exemplary processing system 100, in accordance with an embodiment of the present invention. The processing system 100 includes a set of processing units (e.g., CPUs) 101, a set of GPUs 102, a set of memory devices 103, a set of communication devices 104, and set of peripherals 105. The CPUs 101 can be single or multi-core CPUs. The GPUs 102 can be single or multi-core GPUs. The one or more memory devices 103 can include caches, RAMs, ROMs, and other memories (flash, optical, magnetic, etc.). The communication devices 104 can include wireless and/or wired communication devices (e.g., network (e.g., WIFI, etc.) adapters, etc.). The peripherals 105 can include a display device, a user input device, a printer, an imaging device, and so forth. Elements of processing system 100 are connected by one or more buses or networks (collectively denoted by the figure reference numeral 110).

In an embodiment, memory devices 103 can store specially programmed software modules to transform the computer processing system into a special purpose computer configured to implement various aspects of the present invention. In an embodiment, special purpose hardware (e.g., Application Specific Integrated Circuits, Field Programmable Gate Arrays (FPGAs), and so forth) can be used to implement various aspects of the present invention.

In an embodiment, the memory devices can include all or part of a Warehouse Management System (WMS) 103A. In this way, the computer can be become a specially purposed computer for WMS.

Of course, the processing system 100 may also include other elements (not shown), as readily contemplated by one of skill in the art, as well as omit certain elements. For example, various other input devices and/or output devices can be included in processing system 100, depending upon the particular implementation of the same, as readily understood by one of ordinary skill in the art. For example, various types of wireless and/or wired input and/or output devices can be used. Moreover, additional processors, controllers, memories, and so forth, in various configurations can also be utilized. These and other variations of the processing system 100 are readily contemplated by one of ordinary skill in the art given the teachings of the present invention provided herein.

Moreover, it is to be appreciated that various figures as described below with respect to various elements and steps relating to the present invention that may be implemented, in whole or in part, by one or more of the elements of system 100.

As employed herein, the term "hardware processor subsystem" or "hardware processor" can refer to a processor, memory, software or combinations thereof that cooperate to perform one or more specific tasks. In useful embodiments, the hardware processor subsystem can include one or more data processing elements (e.g., logic circuits, processing circuits, instruction execution devices, etc.). The one or more data processing elements can be included in a central processing unit, a graphics processing unit, and/or a separate processor- or computing element-based controller (e.g., logic gates, etc.). The hardware processor subsystem can include one or more on-board memories (e.g., caches, dedicated memory arrays, read only memory, etc.). In some embodiments, the hardware processor subsystem can include one or more memories that can be on or off board or that can be dedicated for use by the hardware processor subsystem (e.g., ROM, RAM, basic input/output system (BIOS), etc.).

In some embodiments, the hardware processor subsystem can include and execute one or more software elements. The one or more software elements can include an operating system and/or one or more applications and/or specific code to achieve a specified result.

In other embodiments, the hardware processor subsystem can include dedicated, specialized circuitry that performs one or more electronic processing functions to achieve a specified result. Such circuitry can include one or more application-specific integrated circuits (ASICs), FPGAs, and/or PLAs.

These and other variations of a hardware processor subsystem are also contemplated in accordance with embodiments of the present invention.

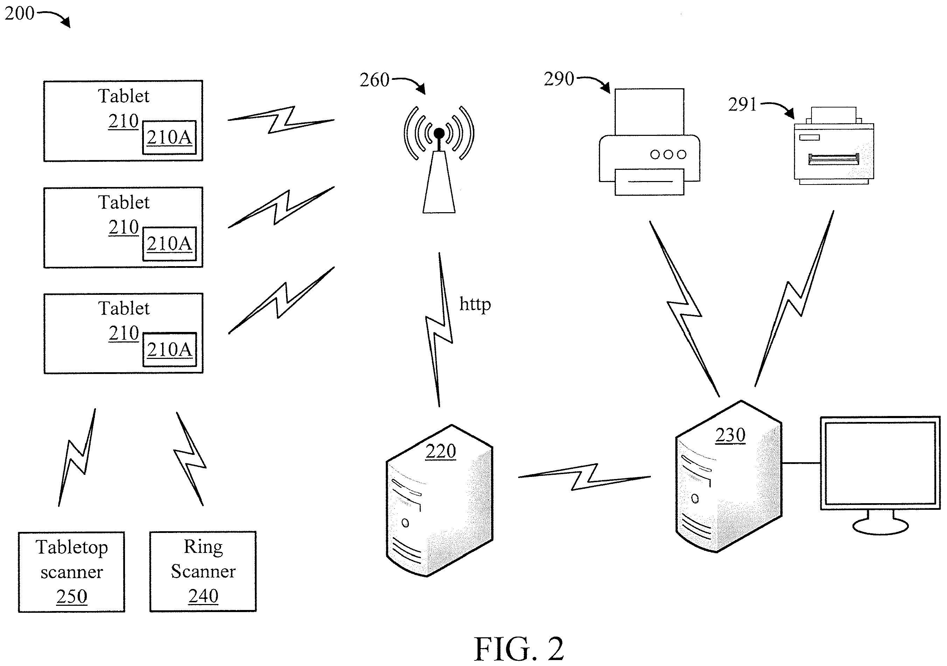

It is to be appreciated that system 200 described below with respect to FIG. 2 is a system for implementing respective embodiments of the present invention. Part or all of processing system 100 may be implemented in one or more of the elements of system 200.

Further, it is to be appreciated that processing system 100 may perform at least part of the methods described herein. Similarly, part or all of system 200 may be used to perform at least part of the methods described herein.

FIG. 2 is a block diagram showing an exemplary system architecture 200 of a Warehouse Management System (WMS) 201, in accordance with an embodiment of the present.

The system architecture 200 is directed to a visual picking application. The system architecture 200 includes tablets 210, a Linux server 220, and a Warehouse Management System (WMS) server 230. Additionally, the system architecture 200 includes a ring scanner 240 and a tabletop or fixed position scanner (hereinafter "tabletop scanner") 250, and an access point 260. Also involved, although not necessarily part of the system architecture 200 but available for use thereby, are a laser printer 291 and/or a thermal printer 292.

As noted above, embodiments of the present invention can be directed to visual pick, single pick, and single pack. The ring scanner 240 can be used for both visual pick and single pick. The tabletop scanner 250 can be used for single pack. The ring scanner 240 can be used to scan location, tote, and order barcodes. The tabletop scanner 250 can be used for scanning a pack station, tote, and UPC of single pieces to be packed.

The tablet software can be an Android® (or other) application running natively on the devices 210. The tablet software will communicate directly with the proposed Linux server 220 on port 80 using a standard Representational State Transfer (REST) Application Programming Interface (API) with respect to access point 260. The Linux server 220 will translate the REST requests to Transmission Control Protocol (TCP) requests directly to the WMS server 230. Socket 80 is the port number assigned to Hypertext Transfer Protocol (HTTP). It is the port from which a computer sends and receives Web client-based communication and messages from a Web server and is used to send and receive HTML pages or data.

Referring to FIG. 2, a further description will now be given regarding various aspects of the present invention in relation to WMS 201.

According to aspects of the present invention, a Warehouse Management System (WMS) 201 is provided. The WMS 201 includes a Visual Picking (VP) system. The visual picking system includes an optical scanner 240. In an embodiment, the optical scanner 240 can be, e.g., a wireless ring (worn) scanner for scanning, e.g., barcodes. For example, the optical scanner 240 can include a Bluetooth-connected barcode scanner ring scanner. Of course, other communication technologies can be used.

The optical scanner 240 is wirelessly connected to a mobile computing device 210, such as, e.g., a tablet, smartphone, laptop, or other mobile computing device. In one possible implementation, the mobile computing device 210 is a tablet computer running an operating system (OS) such as, e.g., Android®, Windows®, IOS, or other mobile operating system. Hence, while other devices can used, the following descriptions of the present invention will involve a tablet as the exemplary mobile device that can be used. Accordingly, an operator can wear the ring optical scanner 240 and carry the tablet 210. During pick and pack operations, the operator, therefore, can use the ring scanner 240 to optically scan items. In an embodiment, the optical scanner 240 can be continuously wirelessly connected to the tablet 210. Thus, the scanned item prompts a dialog on the tablet screen.

The tablet 210 can be in indirect communication with the WMS server 230 using a wired or wireless connection, such as, the internet via a transmission control protocol (TCP) using an application programming interface (API) to directly access records pertaining to the scanned items. That is, in the embodiment of FIG. 2, the scanners 240 and 250 directly communicate with the tablets 210, which, in turn, directly communicate with the Linux server 220 which, in turn, directly communicates with the WMS server 230. In that embodiment, the scanners 240 and 250, as well as the tablets 210, do not directly communicate with the WMS server 230, with the Linux server 200 handling all communications between the WMS server 230 and the other constituent elements. Hence, in this embodiment, all business decisions are made by the WMS server 230. Thus, clustering and so forth as described further herein are performed by the WMS server 230.

In an alternate embodiment, a mobile application 210A resident on the tablets 210 can perform some or all of the functions tasked to the WMS server 230. In such an embodiment, the tablets 210 can report their results to the WMS server 230 for inventory management, archival, and other purposes.

Thus, while all embodiments will involve a mobile application 210A, not all embodiments will include a mobile application 210A that is capable of performing some or all WMS server 230 functions. In such a case, the mobile application 210A can simply report to the WMS server 230 and interact with the WMS server 230 through the Linux server 220 for the picking aspects of the invention while that the WMS server 230 actually performs all the corresponding functions such as clustering and so forth.

The API can include a network API for interacting with data directly in the WMS server 230, such as, e.g., a representational state transfer (REST) API, or other suitable technique for direct interaction with server data through Linux server 220. Thus, the tablet 210 interacts with the WMS server 230 in real-time through Linux server 220 to interact with data corresponding to the items. However, data concerning the items can be downloaded to the tablet 210 for interaction and later uploading with, e.g., back-up files periodically saved to the tablet. Thus, the data can be accessible during service interruptions or other errors in communication with the WMS server 230.

On a pick tour, the operator accesses a manifest on the WMS server 230 via the tablet 210. The warehouse management system 201 can control the WMS server 230 to provide the manifest to the tablet 210, along with required actions for picking each single piece. As the operator fulfills the pick tour, the operator can enter actions and piece locations into an interface on the tablet 210. Each entry is uploaded to the warehouse management system 201 to update the WMS server 230 in real-time with performing the pick tour. For example, the warehouse management system 201 can direct the operator to pick items for a cart regardless of shipment service level or bag or box of the item. Rather, the warehouse management system 201 can provide items to be picked from locations near to each other to limit travel time. Items to be picked can depend on, e.g., common item, common aisle, nearby aisles, service level tote assignment, or bag or box separation, or other possible clustering methods.

The warehouse management system 201 can further direct the picks be added to totes within the cart to maximize the volume or weight of items in each tote. As described above, the items of a tote can be clustered according to, e.g., common aisles, a next aisle or other clustering method. The warehouse management system 201 can automatically determine a most efficient pick order according to locations of each item. The items, clusters of items, tote assignments and order of picking can all be displayed on the tablet 210 to the user in real-time during picking. In the course of picking, the operator can scan the item with the optical scanner 240 as well as the tote to which the item is being added. Thus, the warehouse management system 201 can verify the correct items, totes and sizes in real-time as the operator picks the items.

To pack items in each tote, the operator can scan the tote with the optical scanner 240. The tablet can then be controlled by the warehouse management system 201 to display packing information for each item in the tote as logged in the WMS server 230. Upon scanning the tote, the operator can then scan each item as the items are being packed. Accordingly, items and totes in a delivery order can be updated in the warehouse server in real-time as the items are packed. Furthermore, as the items are scanned, the operator can be provided with item information, such as, e.g., a photo, item number, UPC number, purchaser information, shipping information, shipping method, packaging type, and any special instructions, among other information. Thus, the operator is provided with pertinent information to packing and shipping in real-time via the tablet as controlled by the warehouse management system 201. Upon marking an item as packed on the tablet 210, the warehouse management system 201 can automatically control a printer to print a shipping label to affix to a package including the packed item.

Accordingly, the warehouse management system 201 can interact with the tablet 210 and the WMS server 230 in real-time to provide pertinent information to an operator during picking and packing. As such, the warehouse management system 201 can automatically determine the most efficient picking and packing order, and verify correct picking and packing based on entries by the optical scanner and the tablet. Concurrently, the operator can be provided with information pertinent to picking and packing items while in the course of picking and packing, including being automatically provided with pick tour directions, packing information, and printed shipping labels. Thus, warehouse management can be made more efficient and reliable.

While wireless connections are shown relative to the elements of FIG. 2, any communication method (Bluetooth, WIFI, NFC, etc.) and corresponding supporting structure (transceivers, wires, etc.) can be used between various ones of the elements of FIG. 2. These and other variations of FIG. 2 are readily determined by one of ordinary skill in the art, given the teachings of the present invention provided herein.

In an embodiment, one or more elements of FIG. 2 are implemented using a cloud configuration. For example, one or more of the servers 220 and/or 230 can be implemented in a cloud configuration. In an embodiment, visual pick, single pack, and/or single pack can be provided as a cloud-based service relating to non-cloud physical items to be picked and packed for distribution. As an example, manifests can be uploaded as generated and then obtained from the cloud for visual pick, single pack, and/or single pack.

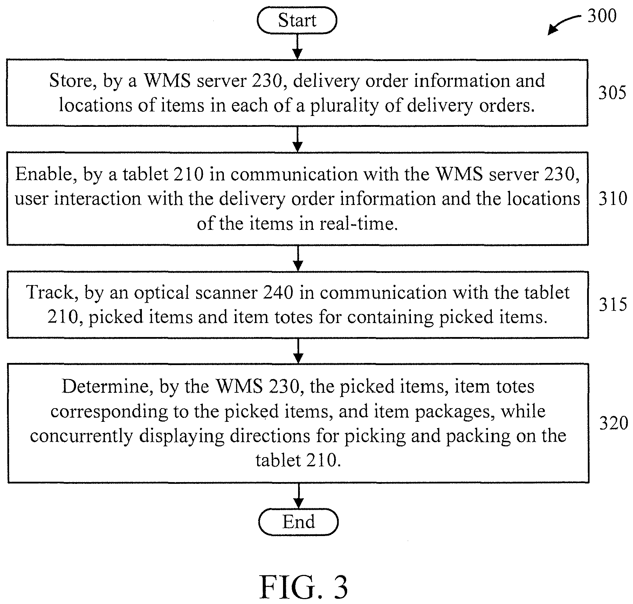

FIG. 3 is a flow diagram showing an exemplary method 300 for visual picking system for single pick and single pack, in accordance with an embodiment of the present invention.

At block 305, store, by a WMS server 230, delivery order information and locations of items in each of a plurality of delivery orders.

At block 310, enable, by a tablet 210 in communication with the WMS server 230, user interaction with the delivery order information and the locations of the items in real-time.

At block 315, track, by an optical scanner 240 in communication with the tablet 210, picked items and item totes for containing picked items.

At block 320, determine, by the WMS server 230, the picked items, item totes corresponding to the picked items, and item packages, while concurrently displaying directions for picking and packing on the tablet 210.

It is to be appreciated that method 300 can support visual pick (multiple items per order), single pick (a single item per order), and single pack (a single item for packing).

A description will now be given regarding visual pick up, in accordance with an embodiment of the present invention.

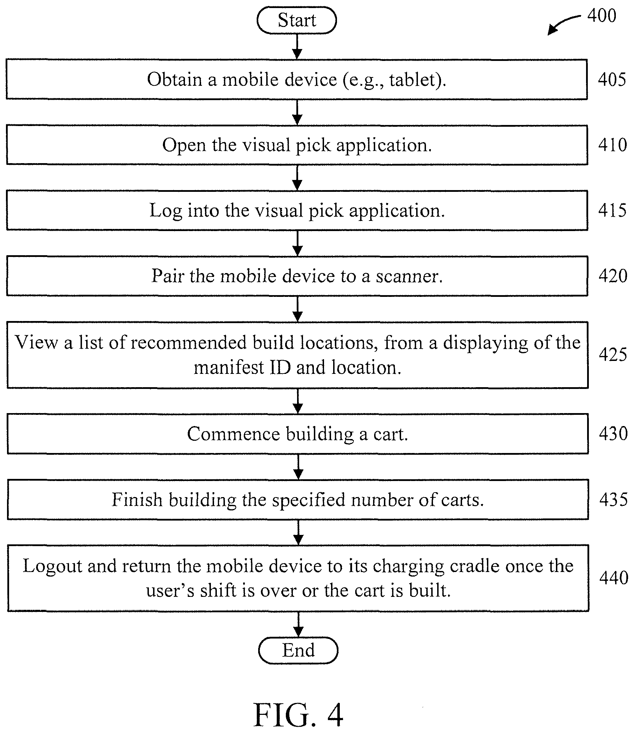

FIG. 4 is a flow diagram showing an exemplary visual pick up method 400, in accordance with an embodiment of the present invention.

At block 405, obtain a mobile device (e.g., tablet).

At block 410, open the visual pick application.

At block 415, log into the visual pick application.

At block 420, pair the mobile device to a scanner. In an embodiment, the scanner is a ring scanner 140, although other scanner types can be used. In an embodiment, the mobile device can be pre-paired with the scanner.

At block 420, view a list of recommended build locations, from a displaying of the manifest ID and location. It is to be appreciated that each pick location has a zone tied to it. Even if a user logs into a certain zone, the cart they actually scan will indicate which zone they are in and should automatically change their zone to the proper zone.

At block 425, commence building a cart. As used herein, the term "cart" refers to a physical structure with mobility that can contain one or more cartons.

At block 430, finish building the specified number of carts.

At block 435, logout and return the mobile device to its charging cradle once the user's shift is over or the cart is built.

A description will now be given regarding piece/detail picking in various (e.g., near, mid, long) terms, in accordance with an embodiment of the present invention.

Current state: Scheduled shipment planning routines, Cart Create (DDA), Cart Prep, Visual Pick, Traditional Pack- out.

Current state benefits: Visual Picking (VP) (1) clusters single location picks to one pick for multiple orders to designated carton puts versus single pick for each carton, (2) simplicity and training and user acceptance.

Near Term: Multi- line orders - same as above. Single Line Single Piece (SLSP) orders - Auto shipment plan and auto cart create, SLSP Visual Pick to tote bar codes , and Visual Packing (prep box, bag, auto print of labels and pack slip at packing station).

Near Term benefits: (1) Batch Pick 10 to 15 times more orders per picking aisle tour, (2) eliminate cart prep labor.

Mid Term: SLSP orders same as above. Multi- line orders - Auto shipment plan and auto cart create, Visual Pick to Order Tote, Visual Packing (prep box, bag, print labels and pack slip at packing station).

Mid Term benefit: (1) Eliminate Cart prep labor for multi- line orders.

Longer Term: SLSP - same as above with Visual Packing for odd items; auto- mated packing; bagging and boxing.

Longer Term benefits: Eliminate packing labor

Multi- line - Batch picking to totes (same as SLSP) with no sorting by order to carton or tote; automated sorter to bin for each order then to Visual Packing (VPA) or automated box packing.

Multi-line Benefits: Batch pick 10 to 15 times more orders per tour and eliminate packing labor.

A description will now be given regarding auto assign released Single Line Single Order Single Piece (SLSOSP) delivery orders to carts (tours), in accordance with an embodiment of the present invention.

Carts will be created to maximize cluster picks (sum by item/SLOC) and limit travel distance regardless of shipment service level or Bag / box.

Auto Assign Delivery Orders to Carts (SLSOSP Carts Auto Created) by (i) common item/SLOC, (ii) common aisle, and (iii) by next aisle.

Orders will NOT be separated into tote assignments by service level or by box or bag packaging type. DCS will allow service level tote assignment or bag or box separation to be configurable for the future, at inception there will be no order characteristic tote assignments

Carts will be separated so that Group 1 delivery orders are never combined on carts with Group 2 delivery orders. Group 2 will be manually planned by order management if SLSOSP functionality is chosen.

Assign Delivery Orders on Cart and Clustered Pick Qty to Totes (DCS Internal Tote #). Tote assignment is maximized to volume limit and/or weight limit by (i) clustered item pick qty for SLOC, (ii) common Aisle by pick path, and (iii) next Aisle by pick path. Picks will be assigned in travel path sequence to tote 1 through tote X (bottom level tote left is tote 1). Tote numbers run bottom left to right, then middle left to right, then top level left to right).

A description will now be given regarding cart tote number assignment in DCS, in accordance with an embodiment of the present invention.

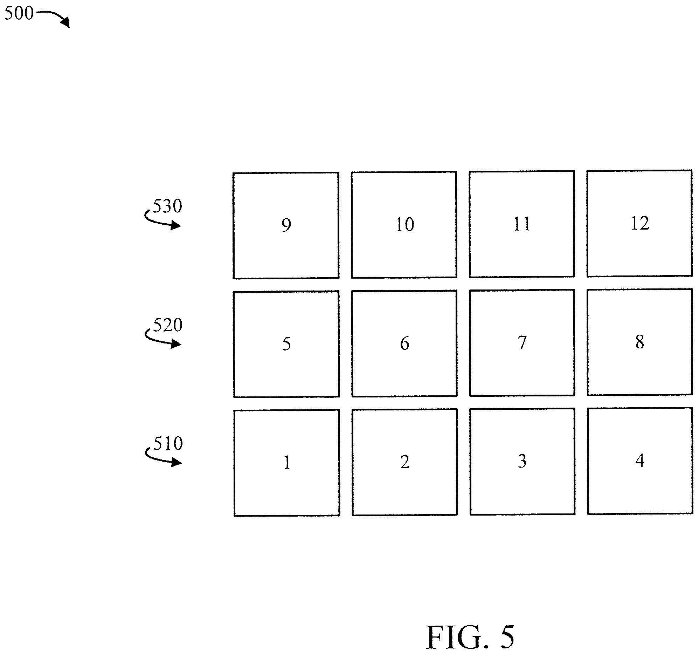

FIG. 5 is a block diagram showing an exemplary cart tote number assignment scheme 500 in DCS, in accordance with an embodiment of the present invention.

As seen, the scheme is multi-level, including a bottom level 510, a middle level 520, and a top level 530. The bottom level 510 includes totes 1-4, the middle level 520 includes totes 5-8, and the top level 530 includes totes 9-12.

Thus, for every cart, an initial assignment will be lower level left to right (totes 1-4), then middle level left to right (totes 5-8), and finally upper level left to right (totes 9-12).

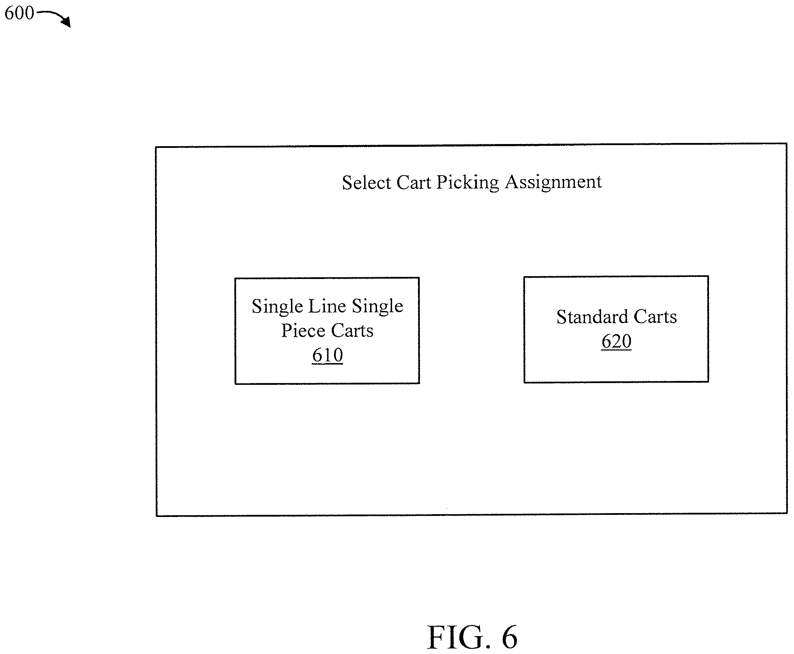

FIG. 6 is a block diagram showing an exemplary SLSOSP visual pick application 600, in accordance with an embodiment of the present invention.

The SLSOSP visual pick application presents two options to a user, namely (i) select SLSOSP carts 610 or (ii) select standard carts 620 (the current VP application).

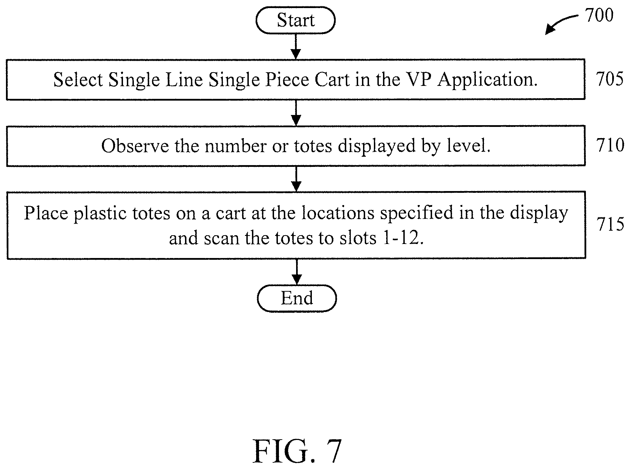

FIG. 7 is a flow diagram showing an exemplary method 700 for SLSOSP Carts/Tours Selection in VP SLSOSP Application, in accordance with an embodiment of the present invention.

At block 705, select Single Line Single Piece Cart in the VP Application.

At block 710, observe the number or totes displayed by level.

At block 715, place plastic totes on a cart at the locations specified in the display and scan the totes to slots 1-12. It is to be noted that there is no need to pre-scan the LPN (i.e., the tote ID), as the LPN will be associated with the location upon the first scan during picking to confirm placement.

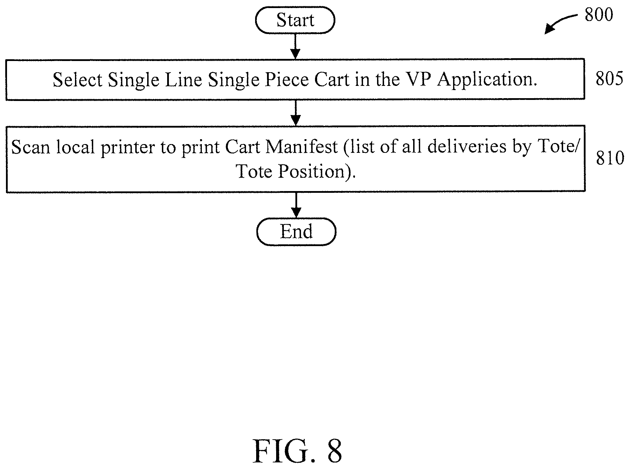

FIG. 8 is a flow diagram showing an exemplary method 800 for a Visual Picking (VA) application, in accordance with an embodiment of the present invention.

At block 805, print a manifest. In an embodiment, in VP, manifests are pre-printed.

At block 810, commence a tour.

SLSOSP VP application functionality is the same as existing VP since clustered picks for each item are deposited in the designated tote(s).

Totes are restricted in size (total cubes) and therefore picks can be deposited to multiple totes based on tote limits or if configured. In an embodiment, picks can be distributed based on shipment service level or Box/Bag packing assignment. This is done by the WMS server 230.

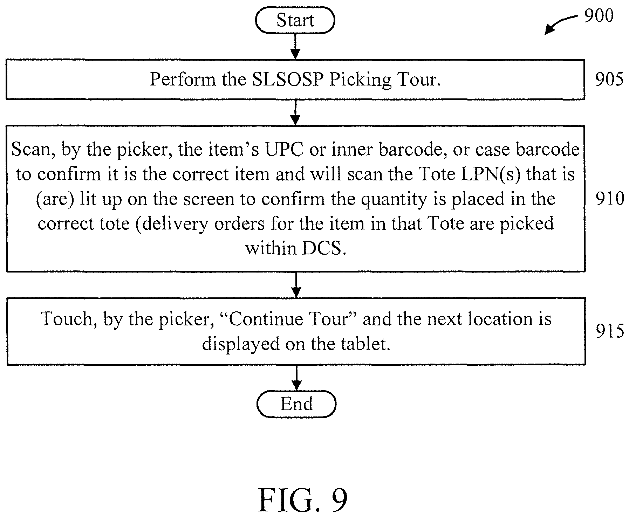

FIG. 9 is a flow diagram showing an exemplary method 900 for a SLSOSP picking tour, in accordance with an embodiment of the present invention.

At block 905, perform the SLSOSP Picking Tour.

In an embodiment, block 905 can involve blocks 905A and 905B.

At block 905A, scan, by the picker, the item's UPC or inner barcode, or case barcode to confirm it is the correct item and will scan the Tote LPN(s) that is (are) lit up on the screen to confirm the quantity is placed in the correct tote (delivery orders for the item in that Tote are picked within DCS.

At block 905B, touch, by the picker, "Continue Tour" and the next location is displayed on the tablet.

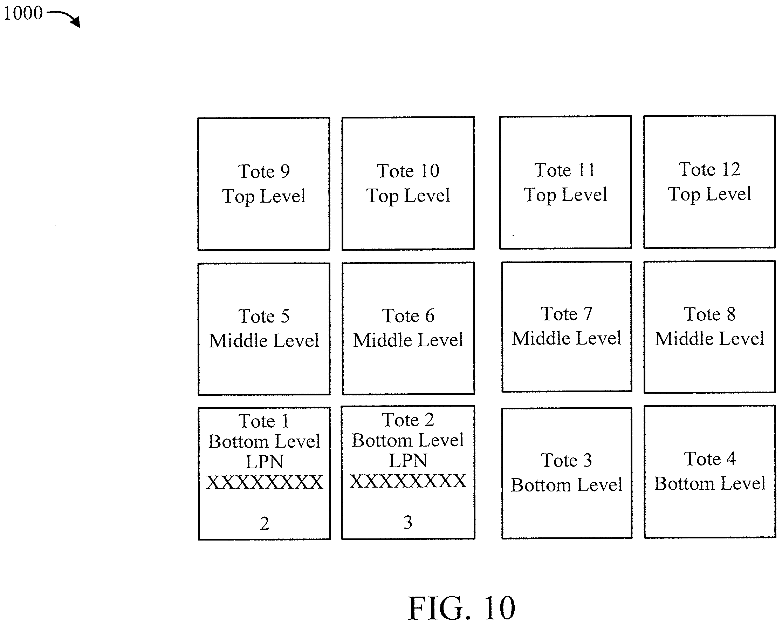

FIG. 10 is a block diagram further showing an exemplary tote arrangement 1000 in a cart, in accordance with an embodiment of the present invention.

As shown, this tote arrangement also specifies, in addition to the tote number and level number, also the tote LPN number in the totes for tote 1 and tote 2.

There will be no "Hospital" functionality when a SLSOSP item pick is "SHORTED". The oldest delivery order(s) for the piece(s) will be have their picks cancelled in DCS and the delivery orders will be removed from the cart. The location will be put in error in DCS and the delivery order(s) will be moved to ready status for next shipment planning run

After all the locations are visited, the picker is instructed to drop the Totes at a Pack Reserve location. It is intended to use on Pack Reserve Location to drop each Tote to and the totes can then flow to the dedicated pack stations. The picker scans the pack reserve location and each individual tote LPN to deposit the Tote to the location. This step is repeated until each Tote is deposited at one or different Pack Reserve locations.

Once the deposit is completed, the tablet is ready to begin a new tour.

A description will now be given of a packing station, in accordance with an embodiment of the present invention.

In an embodiment, a packing station can include (a) a tablet with "Visual Packing Application (VPA)" or personal computer (PC) and monitor with DCS "VPA", (b) scanner tied/paired to VPA, (c) a label printer (e.g., 4x6) for shipping/UCC128 labels, (d) a laser printer for packing lists, (e) packing materials and dunnage at station to support packing type (Breakable Box, Non-breakable Box, Bag), and (f) an automatic tape dispenser for pre-set lengths to form or seal boxes. In an embodiment, the packing station can further include one or more of a weight scale, a cube scan, and an automatic bottom and top box taping machine.

A description will now be given regarding a Visual Packing Application (VPA), in accordance with an embodiment of the present invention.

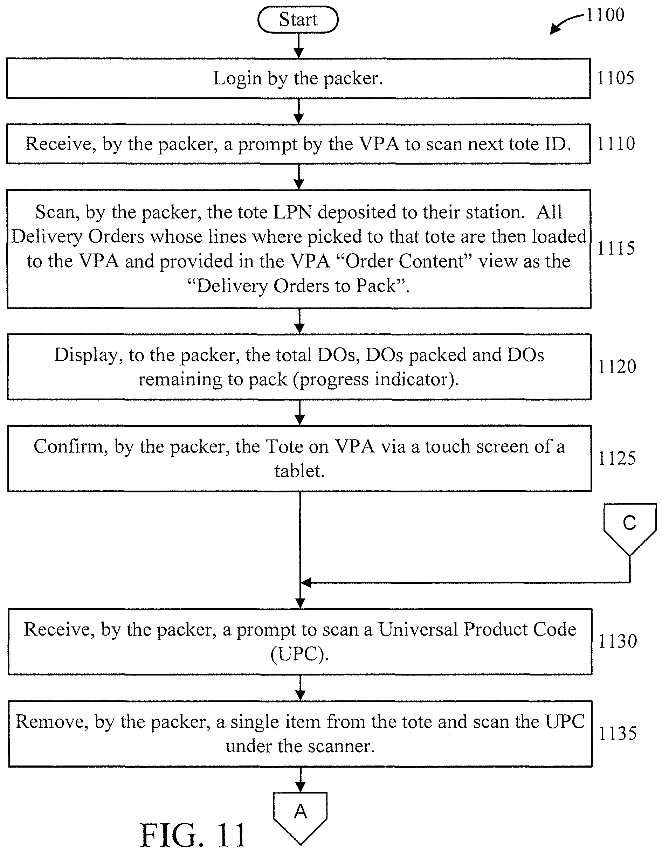

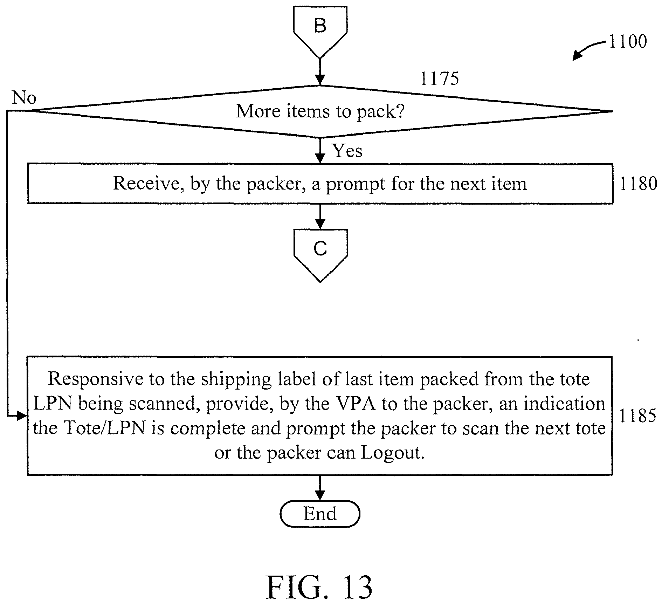

FIGs. 11-13 are flow diagrams showing an exemplary Visual Packing Application (VPA) method 1100, in accordance with an embodiment of the present invention.

At block 1105, login by the packer.

At block 1110, receive, by the packer, a prompt by the VPA to scan next tote ID.

At block 1115, scan, by the packer, the tote LPN deposited to their station. All Delivery Orders whose lines where picked to that tote are then loaded to the VPA and provided in the VPA "Order Content" view as the "Delivery Orders to Pack".

At block 1120, display, to the packer, the total Delivery Orders (Dos), DOs packed and DOs remaining to pack (progress indicator).

At block 1125, confirm, by the packer, the Tote on VPA via a touch screen of a tablet.

At block 1130, receive, by the packer, a prompt to scan a Universal Product Code (UPC).

It is to be appreciated that at any time between UPC scans the packer can decide to stop packing the remaining items in the tote by tapping "suspend packing tote". The delivery orders not packed remain assigned to the Tote LPN and the LPN can be scanned by another packer to begin packing the remaining orders (i.e., the tote can be started and stopped and re-assigned).

At block 1135, remove, by the packer, a single item from the tote and scan the UPC under the scanner.

At block 1140, call up, by the VPA, the oldest order for the highest service level in the tote for the item scanned and present the picker the following information: (a) photo of the item, item number, UPC number; (b) sold to name (name of the SAP account, i.e., Mikasa.com), Delivery Order (DO) #, Purchase Order (PO) #, DCS SID; (c) ship to name and address; (d) ship method; (e) packaging type (Box # or bag # to package the item into); (f) special or standard packaging instructions for the unique item (English or Spanish in large Font).

At block 1145, receive, by the packer, a prompt to (i) tap to confirm packaging or (ii) change package type.

At block 1150, receive, from the packer, a selection of (i) or (ii) per block 1145.

At block 1155, automatically print the shipping label and packing slip for the order at the packing station.

At block 1160, pack, by the packer, the item(s), the packing slip, seal the packaging and apply a shipping label to the package.

At block 1165, scan, by the packer, the shipping label to mark the package complete in VPA and DCS.

At block 1170, forward, by the packer, the box for weight, sorting, and dispatch.

At block 1175, determine if there are any more items to pack. If so, then proceed to block 1180. Otherwise proceed to block

At block 1180, receive, by the packer, a prompt for the next item and return to step 1130.

At block 1185, responsive to the shipping label of last item packed from the tote LPN being scanned, provide, by the VPA to the packer, an indication the tote/LPN is complete and prompt the packer to scan the next tote or the packer can logout.

A description will now be given regarding a tote summary view, in accordance with an embodiment of the present invention.

By tapping on the button to remove a DO for an item that is not found in the tote, the Packer removes the item from the tote LPN and DCS moves the DO to the "Problem Tote"

The Packer can first look to the extra item container in the packing area to determine if the missing item(s) were found in another tote

Once any remaining DOs with no product found are removed to the "Problem Tote" the Tote goes complete and the packer is prompted to scan the next tote or can logout

A description will now be given regarding SLSOSP Packing Application NOTES, in accordance with an embodiment of the present invention.

VPA controls the sequence of the above process to ensure all steps are confirmed in sequence and competed prior to moving to the next item/order to pack.

Packer can use touch screen on VPA to view the remaining DOs in the Tote LPN and remove DOs with missing product to the "Problem Tote". DOs moved to the "Problem Tote" will be reported. If the missing item(s) is found in another tote(s) there will be a central container in the packing area to deposit found or extra items. Packers will look for the missing items in the central container before removing a DO from a tote. If a missing item is found, the Packer simply scans and continues packing. Supervisors will follow-up on DOs in the "Problem Tote" by obtaining the items and having the DOs packed or if no inventory then unpicking the DO in DCS.

The "Problem Tote" will have a master single LPN that can be scanned so items found can be scanned and the oldest DO for the item in the "Problem Tote" is presented to be packed.

VPA records the time from item scan to the label scan at the end of the process to capture Key Performance Indicator (KPI) data by packer, by type (e.g., bag, breakable, etc.).

Training videos for packing different types of items will be available on the tablet or PC Packers trained on the box or bag type for efficient packing - KPI of 15 to 45 per hour depending on bag or box type.

The screen displays an image of proper label placement on the box for the specific customer.

A description will now be given regarding cart preparation (print and build) of Visual Picking (VP), in accordance with an embodiment of the present invention.

The cart build process will include the following: (a) unique pickcart manifest ID; (b) order numbers on pickcart; (c) a unique ID of each order carton; and (d) a numerical position of the order carton on the cart.

Further regarding the print section of the VPA, the same displays a list of manifests that require carts to be prepped based on system orders, priorities, and aisle ID.

Initially, no printer is set. Print prepper will scan a printer and the printer ID will appear onscreen.

The print prepper will scan a card manifest that requires shipping labels and packing slips to be printed. Printing begins upon scanning. In an embodiment, all labels, manifests, etc. are pre-printed.

As manifests are printed, they can change colors. When a user re-enters the print section of the VPA, the data will refresh, and previously printed manifests will disappear from the screen.

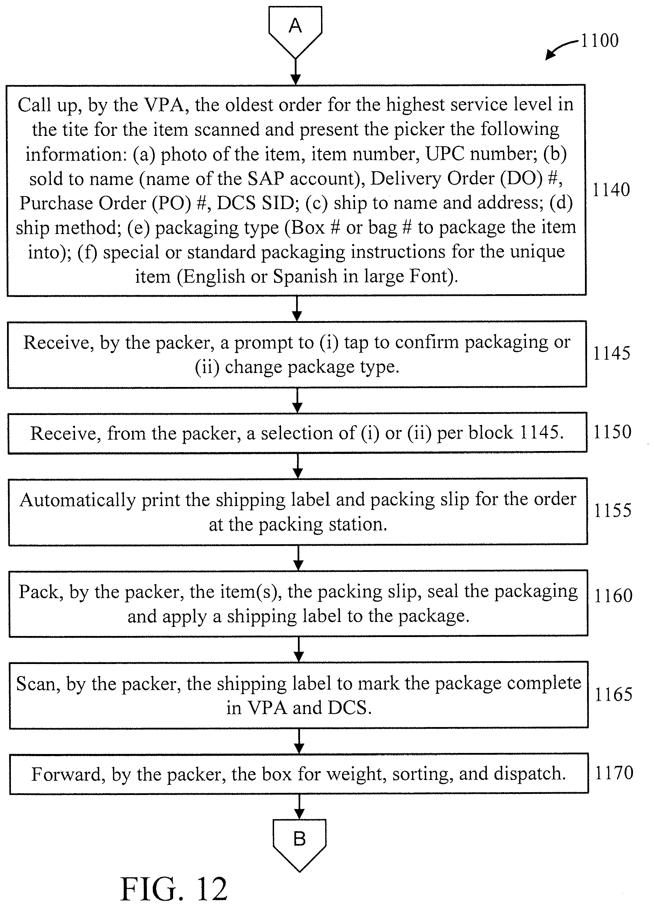

Further regarding the build part of the VPA, a build screen displays an informational list of carts that are available for building boxes prior to commencing a tour, and will dynamically populate as print preppers print out shipping labels and packing slips. Cart builders choose which car they want to build by scanning the cart manifest. Scanning the cart manifest brings up the build:cart detail screen, which displays the slots for boxes, as shown in FIG. 12.

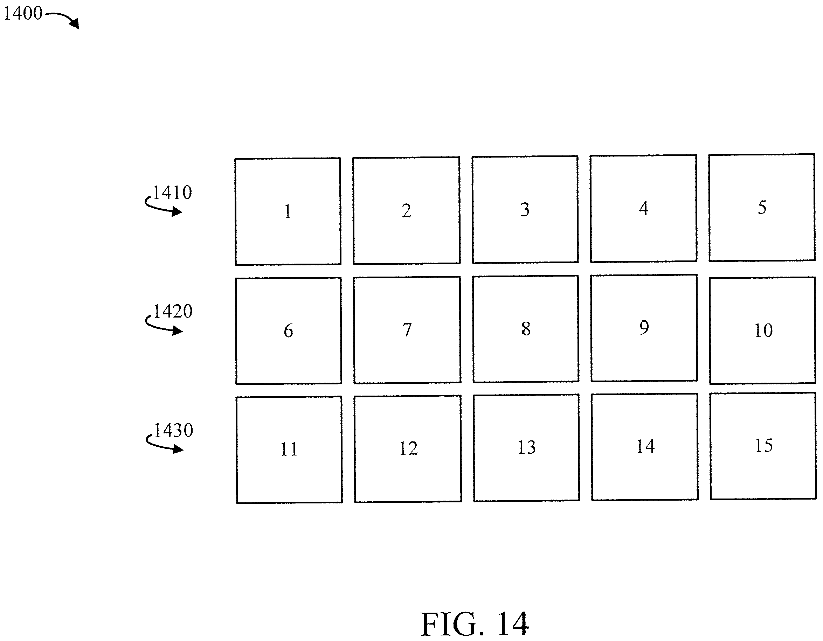

FIG. 14 is a diagram showing an exemplary screen shot 1400 of a build cart portion of the VPA, in accordance with an embodiment of the present invention.

The screen shot 1400 shows three levels, with the highest level 1410 at the top and decreasing through an intermediary level 1420 to the bottom level 1430. Each level includes 5 slots to which boxes (totes) can be added.

The screen shot 1200 shows 3 steps involved in building a cart, namely (1) manifest printed, (2) add boxes to slots, and (3) scan built location.

The cart builder docks their tablet on the cart. This associates the cart, the tablet, and the cart manifest. When cart is docked, the step on the Cart:Build detail screen turns colors (e.g., to green).

Cart builder adds boxes where indicated, and scans carton labels for each box. As they scan, the screen will indicate scanning as boxes change from dotted blue to solid tan as indicated on the following page. Users do not have to scan in any particular order.

When all cartons have been added to the cart and SCANNED, the step will change colors (e.g., to green).

After BUILT location is scanned, the process is DONE, and CART:BUILD screen will return to BUILD index. This removes the previous CART from the BUILD index and sends the CART information to the TOUR index. User MUST undock their tablet to complete the procedure.

A description will now be given regarding the tour portion of Visual Picking (VP), in accordance with an embodiment of the present invention.

The employee is responsible for using the ring scanner, picking all small (less than case) orders from pick locations in Towers and Flow Racks, as well as full pallet pick locations in warehouse.

Having described embodiments directed to single pick and single pack, a description will now be given regarding Visual Picking (VP), in accordance with various embodiments of the present invention.

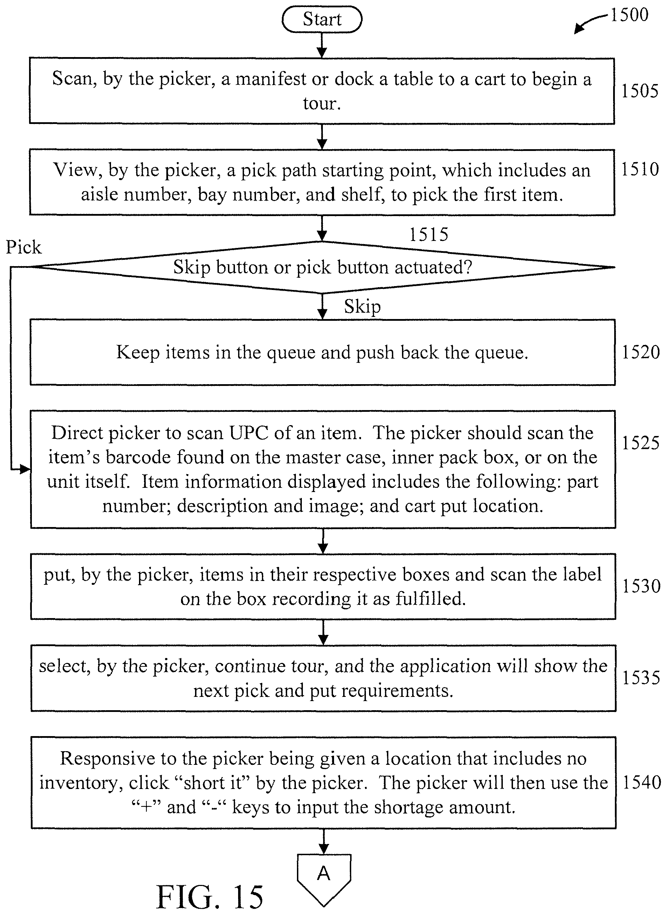

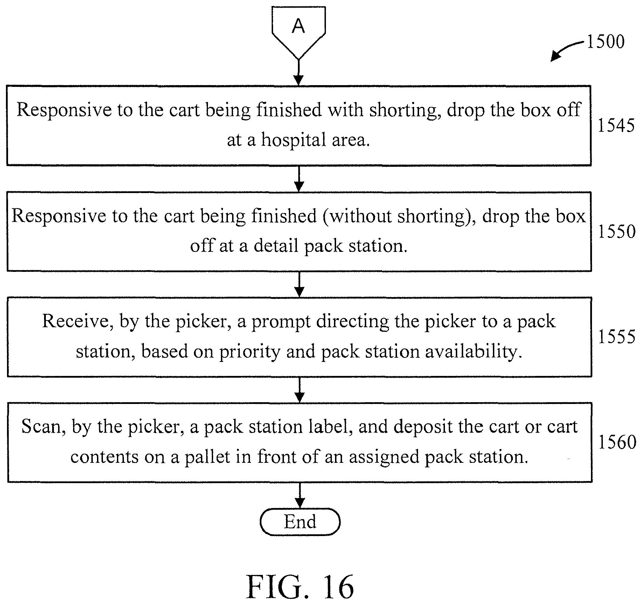

FIGs. 15-16 are flow diagrams showing an exemplary method 1500 for performing a tour in the Visual Picking (VP), in accordance with an embodiment of the present invention

At block 1505, scan, by the picker, a manifest or dock a table to a cart to begin a tour.

At block 1510, view, by the picker, a pick path starting point, which includes an aisle number, bay number, and shelf, to pick the first item.

At block 1515, determine whether a skip button or pick button has been actuated. If a skip button, then proceed to block 1520. Otherwise, proceed to block 1525.

At block 1520, keep items in the queue and push back the queue.

At block 1525, direct picker to scan UPC of an item. The picker should scan the item's barcode found on the master case, inner pack box, or on the unit itself. Item information displayed includes the following: part number; description and image; and cart put location.

Upon scanning the label on the box, the application will confirm a proper pick and put cycle, and highlight proper cart put locations.

At block 1530, put, by the picker, items in their respective boxes and scan the label on the box recording it as fulfilled. Boxes turn color (e.g., Blue) when filled.

At block 1535, select, by the picker, continue tour, and the application will show the next pick and put requirements. If the picker scans a wrong item, the application will indicate an error. If the picker puts the item in the wrong box, the application will indicate an error.

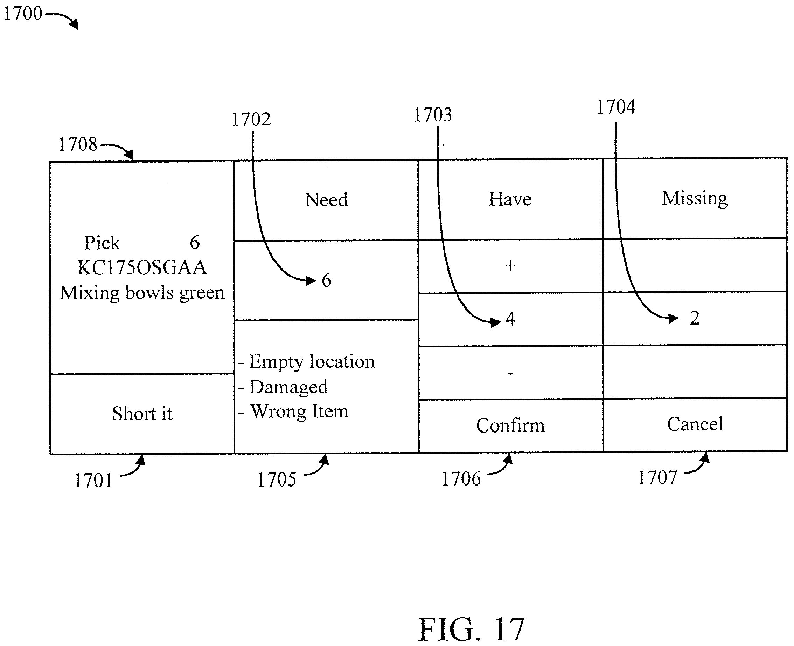

At block 1540, responsive to the picker being given a location that includes no inventory, click "short it" by the picker. The picker will then use the "+" and "-" keys to input the shortage amount. Short it criteria can include shorting cartons with the largest number of items first over cartons with a lesser number of items. FIG. 17 is a diagram showing an exemplary screenshot 1700 of a shortage management frame, in accordance with an embodiment of the present invention. The frame includes a short it button 1701, an amount needed button 1702, an amount available 1703, an amount missing 1704, a shortage reason button 1705, a confirm button 1706, a cancel button 1707, and a window 1708 listing the requested item, its description and quantity sought. The application will aid the user in calculating the shortage as well as keep a running tally of the items have been put in. The picker will select a shortage reason from the reasons drop down menu that occurs upon actuating the shortage reason button 1705. When the shortage number and reason has been input, the picker clicks the confirm button 1706 and returns to continue their tour.

At block 1545, responsive to the cart being finished with shorting, drop the box off at a hospital area.

At block 1550, responsive to the cart being finished (without shorting), drop the box off at a detail pack station.

At block 1555, receive, by the picker, a prompt directing the picker to a pack station, based on priority and pack station availability.

At block 1560, scan, by the picker, a pack station label, and deposit the cart or cart contents on a pallet in front of an assigned pack station.

A description will now be given regarding a single pick application, in accordance with an embodiment of the present invention.

In an embodiment, the purpose of Single pick is to isolate orders that are Single Line/Single Piece/Single Orders (SLSPSOs) to create a more efficient pick tour in building off of the Visual Pick (VP) Application. The pick carts are loaded with plastic totes and filled up by volume using the Single Pick application. After a cart is completely picked, that cart is dropped off at a Single Pack Reserve location. A packer who is logged into the Single Pack application can pick up these plastic totes full of orders and scan each UPC to print a packing slip and ship label. This efficient process reduces the number of pick tours and prep work because of the high cart compression over Visual Pick. The Single Pick and Single Pack applications are used together to complete orders.

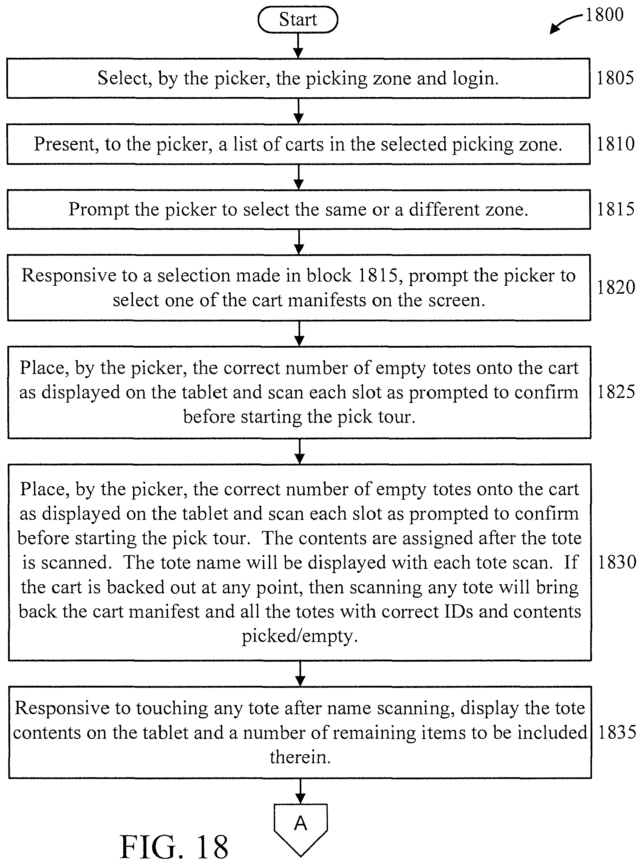

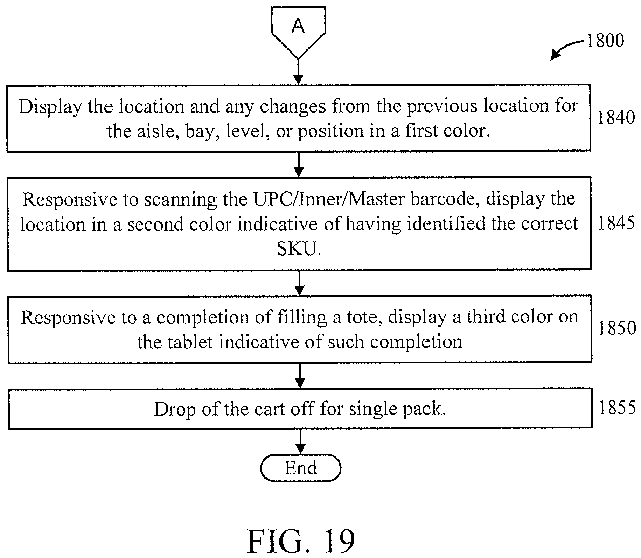

FIGs. 18-19 are flow diagrams showing an exemplary method 1800 for single pick, in accordance with an embodiment of the present invention.

At block 1805, select, by the picker, the picking zone and login.

At block 1810, present, to the picker, a list of carts in the selected picking zone.

At block 1815, prompt the picker to select the same or a different zone.

At block 1820, responsive to a selection made (by the picker) in block 1815, prompt the picker to select one of the cart manifests on the screen.

At block 1825, place, by the picker, the correct number of empty totes onto the cart as displayed on the tablet and scan each slot as prompted to confirm before starting the pick tour.

At block 1830 (after selecting cart manifest ID), place, by the picker, the correct number of empty totes onto the cart as displayed on the tablet and scan each slot as prompted to confirm before starting the pick tour. The contents are assigned after the tote is scanned. The tote name will be displayed with each tote scan. If the cart is backed out at any point, then scanning any tote will bring back the cart manifest and all the totes with correct IDs and contents picked/empty.

At block 1835, responsive to (the picker) touching any tote after name scanning, display the tote contents on the tablet and a number of remaining items to be included therein.

At block 1840, display the location and any changes from the previous location for the aisle, bay, level, or position in a first color.

At block 1845, responsive to (the picker) scanning the UPC/Inner/Master barcode, display the location in a second color indicative of having identified the correct SKU.

At block 1845, responsive to a completion of filling a tote, display a third color on the tablet indicative of such completion.

At block 1850, drop of the cart off for singe pack.

A description will now be given regarding single pack, in accordance with an embodiment of the present invention.

A packer will login at a single pack station equipped with a tablet, tabletop scanner, USB hub and charger, label printer for the shipping label and a laser printer for the packing slips. The printers are defaulted to the location of the pack station ID.

The scanner can be removed from the holster to scan big items, or it can passively scan when a piece is waved underneath the tabletop scanner.

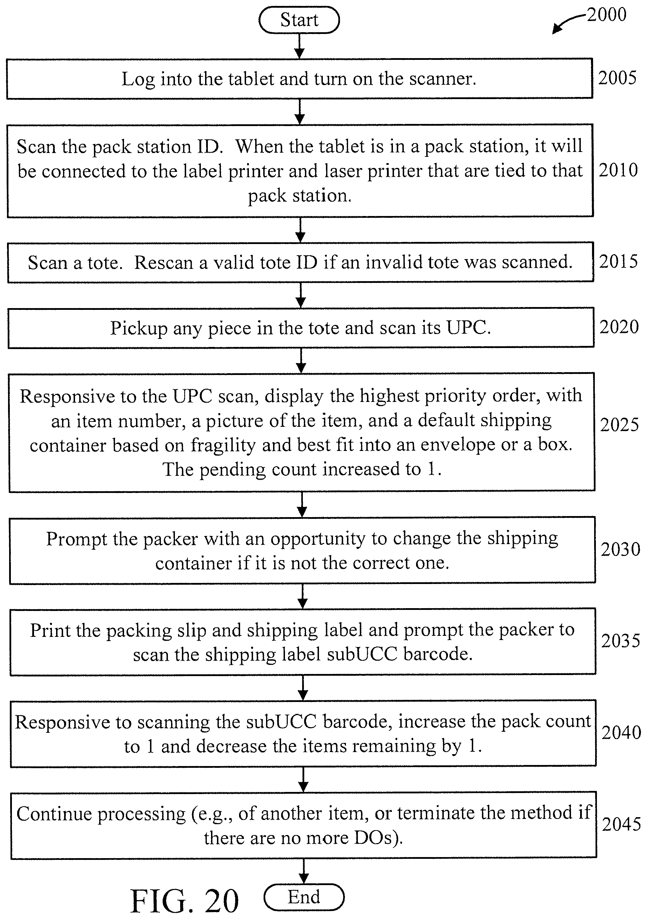

FIG. 20 is a flow diagram showing an exemplary method 2000 for single pack, in accordance with an embodiment of the present invention.

At block 2005, log into the tablet and turn on the scanner.

At block 2010, scan the pack station ID. When the tablet is in a pack station, it will be connected to the label printer and laser printer that are tied to that pack station. Only one packer can work in a pack station at one time. A packer can leave the pack station and rescan into another empty pack station.

At block 2015, scan a tote. Rescan a valid tote ID if an invalid tote was scanned.

At block 2020, pickup any piece in the tote and scan its UPC.

At block 2025, responsive to the UPC scan, display the highest priority order, with an item number, a picture of the item, and a default shipping container based on fragility and best fit into an envelope or a box. The pending count increased to 1.

At block 2030, prompt the packer with an opportunity to change the shipping container if it is not the correct one.

At block 2035, print the packing slip and shipping label and prompt the packer to scan the shipping label subUCC barcode.

At block 2040, responsive to scanning the subUCC barcode, increase the pack count to 1 and decrease the items remaining by 1.

At block 2045, continue processing (e.g., of another item, or terminate the method if there are no more DOs).

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language, and procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

Reference in the specification to "one embodiment" or "an embodiment" of the present invention, as well as other variations thereof, means that a particular feature, structure, characteristic, and so forth described in connection with the embodiment is included in at least one embodiment of the present invention. Thus, the appearances of the phrase "in one embodiment" or "in an embodiment", as well any other variations, appearing in various places throughout the specification are not necessarily all referring to the same embodiment. However, it is to be appreciated that features of one or more embodiments can be combined given the teachings of the present invention provided herein.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items listed.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be accomplished as one step, executed concurrently, substantially concurrently, in a partially or wholly temporally overlapping manner, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Having described preferred embodiments of a system and method (which are intended to be illustrative and not limiting), it is noted that modifications and variations can be made by persons skilled in the art in light of the above teachings. It is therefore to be understood that changes may be made in the particular embodiments disclosed which are within the scope of the invention as outlined by the appended claims. Having thus described aspects of the invention, with the details and particularity required by the patent laws, what is claimed and desired protected by Letters Patent is set forth in the appended claims.

## Claims

1. A visual picking and packing system for pick and pack, comprising:
a warehouse management server for storing delivery order information and locations of items specified in each of a plurality of delivery orders;
a mobile device, in communication with the warehouse management server, for enabling user interaction with the delivery order information and the locations of the items in real-time;
an optical scanner, in communication with the mobile device, for tracking (i) picked ones of the items and (ii) item totes containing the picked ones of the items; and
wherein the warehouse management server determines the picked ones of the items, the item totes containing the picked ones of the items, and item packages for the picked ones of the items, and sends directions displayed on the mobile device for picking and packing the picked one of the items in each of the plurality of delivery orders responsive to the determining.

2. The visual picking and packing system of claim 1, wherein the directions for packing comprise specifying a suitably sized packaging for containing each of the picked ones of the items.

3. The visual picking and packing system of claim 1, wherein the user interaction comprises an item shortage procedure for adjusting from a desired item number to an available item number.

4. The visual picking and packing system of claim 1, wherein the mobile device is a mobile communication device selected from the group consisting of a tablet and a mobile smartphone.

5. The visual picking and packing system of claim 1, wherein the mobile device comprises an application for enabling the user interaction.

6. The visual picking and packing system of claim 1, further comprising a ring scanner for scanning the locations, the item totes, and order barcodes.

7. The visual picking and packing system of claim 1, further comprising a tabletop scanner for scanning a pack station, the item totes, and the Universal Product Code of single pieces to be packed.

8. The visual picking and packing system of claim 1, further comprising a communications server for facilitating communication between the mobile device and the warehouse management server and preventing direct communication between the mobile device and the warehouse management server.

9. A visual picking and packing method for pick and pack, comprising:
storing, by a warehouse management server, delivery order information and locations of items specified in each of a plurality of delivery orders;
enabling, by a mobile device in communication with the warehouse management server, user interaction with the delivery order information and the locations of the items in real-time;
tracking, by an optical scanner in communication with the mobile device, (i) picked ones of the items and (ii) item totes containing the picked ones of the items; and
determining, by the warehouse management server, the picked ones of the items, the item totes containing the picked ones of the items, and item packages for the picked ones of the items
wherein directions are displayed on the mobile device for picking and packing the picked one of the items in each of the plurality of delivery orders responsive to the determining.

10. The visual picking and packing system of claim 1 or the visual picking and packing method of claim 9, wherein each of the plurality of delivery orders is for a single item, and the directions support cluster picking of single items into the item totes on a single trip through a picking area.

11. The visual picking and packing system or visual picking and packing method of claim 10, wherein the directions comprise visual aids of instructions on a pick path, an identity of the single item, and a location of the single item, wherein the directions further comprise an instruction to deposit the single item into an applicable one of the item totes, and wherein the item totes are serialized for association with a respective one of the plurality of orders.

12. The visual picking and packing system or visual picking and packing method of claim 10, wherein the directions for packing comprise indicating packing instructions for the single item using a visual representation of the single item and printing a packing slip and shipping label for the single item, responsive to a user scanning a universal product code for the single item.

13. The visual picking and packing system of claim 1 or the visual picking and packing method of claim 9, wherein each of the plurality of delivery orders is for a multiple ones of the items, and the directions support cluster picking multiple orders at a time on a single trip through a picking area.

14. The visual picking and packing system or visual picking and packing method of claim 13, wherein the directions comprise visual aids of instructions on a pick path, identities of applicable ones of the items, a quantity of the applicable ones of the items, the locations of the applicable ones of the items, and the directions further comprise an instruction to deposit the multiple ones of the items into an applicable one of the item totes.

15. The visual picking and packing system or visual picking and packing method of claim 13, wherein the directions specify a unique manifest identifier, a unique order number, a unique identifier of each of the item totes, and numerical positions of each of the item totes on a cart.
